# EUROPEAN PATENT SPECIFICATION

(11) **EP 2 375 204 B1**
(45) Date of publication and mention of the grant of the patent: **28.10.2015**
(21) Application number: 11158826.5
(22) Date of filing: 18.03.2011
(51) Int. Cl.: F25D 29/00, F25D 23/00

(54) **Display panel assembly for electrical appliances**
Anzeigetafelanordnung für elektrische Anwendungen
Ensemble de panneau d'affichage pour appareils électriques

(30) Priority: 02.04.2010 TR 201002542
(43) Date of publication of application: 12.10.2011
(73) Proprietor: Vestel Beyaz Esya Sanayi ve Ticaret A.S., 45030 Manisa (TR)
(72) Inventor: Yildiz, Caner, 45030 Manisa (TR)
(74) Representative: Cayli, Hülya

(56) References cited:
- EP-A2- 1 530 014
- US-A1- 2006 144 056

## Description

### Technical Field

This invention relates to the assemble structure of the display panels used in electrical appliances such as white goods or household appliances.

### Prior Art

White goods, also known as heaters, coolers and washers, or electrical appliances such as other household appliances mostly include control and display panels that program and indicate the functions thereof. Since the increasing popularity of the touch screens, the said display panels are manufactured by using such type of screens. Use of these screens as control panels at the same time provides convenience for manufacturers and gives an aesthetic view to products. The placement of touch screens on these appliances and screen positions with respect to the transparent material that covers the front of these screens are crucial for viewing the display panel properly. Therefore, there have been various studies in the prior art on the issue. The published patent application No CN101063590 discloses an assemble structure developed for arrangement of a display panel However, multi piece mechanism of the assemble structure disclosed in this application creates manufacturing and mounting problems as well as high costs.

An electrical appliance having a display panel and a stress member is known from CN1683858. An electrical appliance according to the preamble of claim 1 is known from US2006/0144056.

### Brief Description of Invention

The electrical appliance of the invention comprises a display panel in the form of a touch screen; a recess-shaped cavity in the appliance body into which the panel is placed; a transparent plate that covers the front of the panel. The appliance is provided with at least one connection element which both engages with a hole on the panel and is fixed to at least one mounting slot in the cavity; at least one stress member which leans to the back surface of the panel and to the inner surface of the cavity and applies force to the panel outwardly. The panel can be slid inwardly-outwardly on the connection element, and the back surface of the plate rests on the front surface of the panel in the mounted state of the plate to the appliance.

### Objective of Invention

The aim of this invention is to form an assemble structure for the display panels used in electrical appliances.

Another aim of this invention is to provide ease of mounting with the said assemble structure.

A further aim of this invention is to create an easy-to-implement; cost-effective and reliable assemble structure for display panels.

### Description of the Drawings

An example of the assemble structure for display panel of the invention is illustrated in the annexed figures wherein;
Figure 1 is the view of the disassembled state of the display panel.
Figure 2 is the side sectional view of the display panel when mounted to an electrical appliance.
Figure 3 is the detailed view of a section of Figure 2.

The parts in the figures are individually enumerated and the corresponding meanings of the reference numbers are as follows:
Electrical appliance (A)
Body of the appliance (1)
Panel placement cavity (2)
Display panel (3)
Plate (4)
Connection element (5)
Mounting slot (6)
Hole (7)
Face (8)
Rabbet (9)
Stress member (10)
Back surface (11)
Inner surface (12)
Front surface (13)
Back surface (14)
Detail zone (D)
Outward direction (+X)
Inward direction (-X)

### Description of Invention

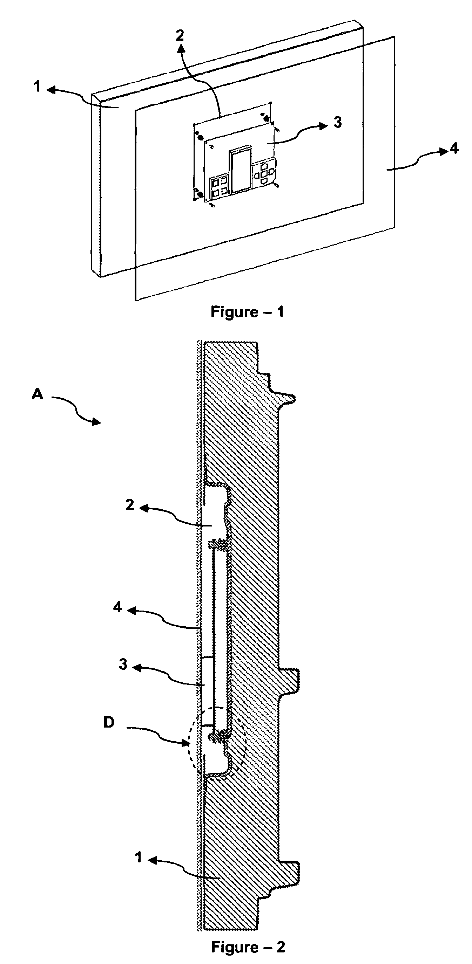

Figure 1 shows a view of the disassembled state of the connection of an exemplary display panel (3) to a body (1) of an electrical appliance. The display panel (3) is touch screen type and is placed into a cavity (2) in the body (1) of the appliance. A transparent plate (4) (partially or completely transparent) is provided in front of the panel (3) in order to protect the panel (3) and to give an aesthetic view.

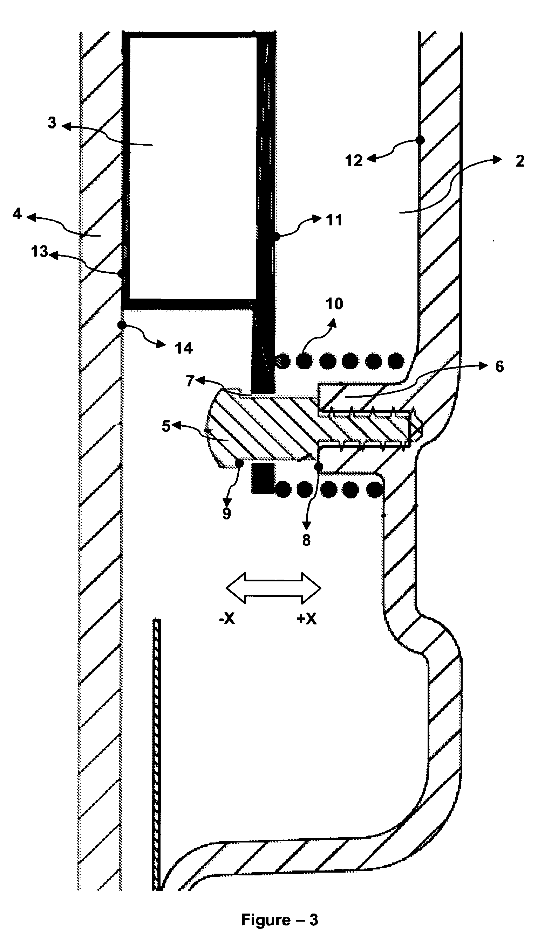

Figure 2 illustrates the side sectional view of the display panel (3) when mounted, in accordance with the assemble structure shown in Figure 1, to an electrical appliance (A). The body (1) of the electrical appliance (A) is illustrated as a refrigerator door as an example. A cavity (2), into which the display panel (3) is placed, is formed on the said body (1) of the appliance. The cavity (2) is in the form of a recess into the body (1). Following the placement of the display panel (3) into the cavity (2), a transparent plate (4) that covers at least some portion of the body (1) and the front portion of the cavity (2) (therefore of the panel (3)) is used. To get most out of the feature of viewing the display panel and of pressing the buttons on the display panel, it is crucial that the back surface (14) of the plate (4) and the front surface (13) of the panel (3) contact planarly such that no space is left therebetween. The assemble structure, the details of which are given below, is developed so as not to leave any space between the plate (4) and the panel (3). Therefore, the detail zone (D) shown in Figure 2 is illustrated in detail in Figure 3.

As illustrated in Figure 3, the display panel (3) is engaged with at least one mounting slot (6) in the cavity (2) by means of at least one connection element (5) (illustrated in the form of a screw as an example in Figure 3). The connection element (5) is both engaged with a hole (7) on the panel (3) and is fixed in the slot (6). In this assemble structure, it is preferred that the panel (3) can move inwardly (+X direction) and outwardly (-X direction) to some extent. To this end, the panel (3) can be slid on the connection element (5), which is fixed in the slot (6), inwardly-outwardly (+X, -X) within a certain range (by making use of the said hole (7)). The panel (3) can advance inwardly (+X) until it meets with an obstacle. For instance, Figure 3 illustrates this obstacle as the face (8) of the mounting slot (6). There is also provided an obstacle for the panel (3) in outward direction (-X), and the movement of the panel (3) towards this direction is made to some extent. The example in Figure 3 illustrates the said obstacle as a rabbet (9) on the connection element (5). The rabbet (9) may be used as an obstacle in outward direction (-X) since the rabbet (9) has such dimensions that do not allow the rabbet (9) to pass through the panel hole (7).

In the embodiment of the invention, at least one stress member (10) that applies force to the panel (3) outwardly is used. Thus, it is preferred that the panel (3) leans onto an obstacle in outward direction (-X), for instance onto a rabbet (9), before the plate (4) is mounted. It is appropriate to use a spring (or a flexible component that serves as a spring) as the stress member (10), and this spring leans onto the back surface of the panel (3) and inner surface (12) of the said cavity (2). The stress member (10) (or the spring), stuck to some extent here, keeps the panel (3) away from the inner surface (12). One of the preferred embodiments of the invention is that the spring is in such a form as to encompass the connection element (5).

While the plate (4) used for covering the front of the display panel (3) is mounted to body (1), the plate (4) leans onto the panel (3) and pushes the panel (3) inwardly (+ X direction). The panel (3) remains always in contact with the plate (4) as the stress member (10) applies force to the panel (3) in the opposite direction (-X). The structure illustrated in Figure 3 is intended for at least one portion of the panel (3), and it is also possible to use multiple structures. A small number of components in the said assemble structure of the appliance (A) of the invention provides ease of manufacturing and mounting.

## Claims

1. An electrical appliance (A) which comprises a display panel (3) in the form of a touch screen; a recess-shaped cavity (2) in a body (1) of the appliance into which the panel (3) is placed; a transparent plate (4) that covers a front (13) of the panel (3) **characterized in that** it comprises
at least one connection element (5) which is both engaged with a hole (7) on the panel (3) and is fixed in at least one mounting slot (6) in the cavity (2);
at least one stress member (10) which leans to a back surface (11) of the panel (3) and to an inner surface (12) of the said cavity (2) and which applies force to the panel (3) in an outward direction (-X);
**and in that** the panel (3) can be slid inwardly-outwardly (+X,-X) on the connection element (5), and a back surface (14) of the plate (4) rests on the front surface (13) of the panel (3) in the mounted state of the plate (4) to the appliance (A).

2. An appliance (A) according to Claim 1 **characterized in that** it comprises a face (8) of the mounting slot (6) onto which the panel (3) leans in inward direction (+X).

3. An appliance (A) according to Claim 1 **characterized in that** it comprises a rabbet (9) on the connection element (5) onto which the panel (3) leans in outward direction (-X).

4. An appliance (A) according to Claim 1 **characterized in that** the stress member (10) is a spring.

5. An appliance (A) according to Claim 4 **characterized in that** the said spring is in such a form that encompasses the connection element (5).

6. An appliance (A) according to Claim 1 **characterized in that** the connection member (5) is in the form of a screw.

7. An appliance (A) according to Claim 1 **characterized in that** the stress member (10) is a flexible component that serves as a spring.

## Patentansprüche

1. **Elektrische Anwendung** (A) mit einer Anzeigetafel (3) in Form eines Berührungsbildschirms (touch screen); einem vertiefungsförmigen Hohlraum (2) in einem Gehäuse (1) der Anwendung, in dem die Tafel (3) angeordnet ist; einer transparenten Platte (4), die eine Vorderseite (13) der Tafel (3) bedeckt, **dadurch gekennzeichnet, dass** sie umfasst:
- zumindest ein Verbindungselement (5), das sowohl mit einem Loch (7) in der Tafel (3) gekuppelt ist als auch in zumindest einer Befestigungsaussparung (6) in dem Hohlraum (2) angebracht ist;
- zumindest ein Spannelement (10), das an einer hinteren Oberfläche (11) der Tafel (3) und an einer inneren Oberfläche (12) des Hohlraums (2) lehnt, und das eine Kraft auf die Tafel (3) in eine nach außen gerichtete Richtung (-X) wirkt;
und dadurch, dass die Tafel (3) auf dem Verbindungselement (5) nach innen und nach außen (+X, -X) rutschbar ist und eine hintere Oberfläche (14) der Platte (4) auf der vorderen Oberfläche (13) der Tafel (3) in montiertem Zustand der Platte (4) mit dem Gerät (A) liegt.

2. Anwendung (A) nach Anspruch 1, **dadurch gekennzeichnet, dass** sie eine Fläche (8) auf der Befestigungsaussparung (6) umfasst, auf der die Tafel (3) in nach innen gerichteter Richtung (+X) lehnt.

3. Anwendung (A) nach Anspruch 1, **dadurch gekennzeichnet, dass** es einen Anschlag (9) auf dem Verbindungselement (5) umfasst, auf dem die Tafel (3) in nach außen gerichteter Richtung (-X) lehnt.

4. Anwendung (A) nach Anspruch 1, **dadurch gekennzeichnet, dass** das Spannelement (10) eine Feder ist.

5. Anwendung (A) nach Anspruch 4, **dadurch gekennzeichnet, dass** die Feder so ausgestaltet ist, das Verbindungselement (5) zu umgreifen.

6. Anwendung (A) nach Anspruch 1, **dadurch gekennzeichnet, dass** das Verbindungselements (5) in Form einer Schraube ausgebildet ist.

7. Anwendung (A) nach Anspruch 1, **dadurch gekennzeichnet, dass** das Spannelement (10) eine flexible Komponente ist, die als Feder dient.

## Revendications

1. Appareil électrique (A) qui comprend un panneau d'affichage (3) sous forme d'écran tactile ; une cavité en forme d'évidement (2) dans un corps (1) de l'appareil dans lequel le panneau (3) est placé ; une plaque transparente (4) qui couvre un avant (13) du panneau (3),
**caractérisé en ce qu'**il comprend
au moins un élément de raccordement (5) qui est à la fois en prise avec un trou (7) sur le panneau (3) et est fixé dans au moins une fente de montage (6) dans la cavité (2) ;
au moins un élément de contrainte (10) qui est incliné vers une surface arrière (11) du panneau (3) et vers une surface intérieure (12) de ladite cavité (2) et qui applique une force sur le panneau (3) dans une direction vers l'extérieur (-X) ;
et **en ce que** le panneau (3) peut coulisser vers l'intérieur-vers l'extérieur (+X, -X) sur l'élément de raccordement (5), et une surface arrière (14) de la plaque (4) repose sur la surface avant (13) du panneau (3) dans l'état monté de la plaque (4) sur l'appareil (A).

2. Appareil (A) selon la revendication 1, **caractérisé en ce qu'**il comprend une face (8) de la fente de montage (6) sur laquelle le panneau (3) s'appuie dans une direction vers l'intérieur (+X).

3. Appareil (A) selon la revendication 1, **caractérisé en ce qu'**il comprend une feuillure (9) sur l'élément de raccordement (5) sur laquelle le panneau (3) s'appuie dans une direction vers l'extérieur (-X).

4. Appareil (A) selon la revendication 1, **caractérisé en ce que** l'élément de contrainte (10) est un ressort.

5. Appareil (A) selon la revendication 4, **caractérisé en ce que** ledit ressort est sous forme telle qu'il entoure l'élément de raccordement (5).

6. Appareil (A) selon la revendication 1, **caractérisé en ce que** l'élément de raccordement (5) est sous forme de vis.

7. Appareil (A) selon la revendication 1, **caractérisé en ce que** l'élément de contrainte (10) est un composant flexible qui sert de ressort.
